**Europäisches Patentamt**

**European Patent Office**

**Office européen des brevets**

(19)

(11)  **EP 1 529 798 A1**

(12)  **EUROPÄISCHE PATENTANMELDUNG**

(43)  Veröffentlichungstag:
11.05.2005  Patentblatt 2005/19

(51)  Int Cl.⁷: **C08J 5/18**, B32B 27/36

(21)  Anmeldenummer: 04025893.1

(22)  Anmeldetag: 02.11.2004

(84)  Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30)  Priorität: **10.11.2003  DE 10352444**

(71)  Anmelder: **Mitsubishi Polyester Film GmbH
65203 Wiesbaden (DE)**

(72)  Erfinder:
• **Pfeiffer, Herbert, Dr. Professor
55126 Mainz (DE)**

• **Janssens, Bart, Dr.
65189 Wiesbaden (DE)**
• **Konrad, Matthias, Dr.
65719 Hofheim (DE)**
• **Stopp, Andreas
55218 Ingelheim (DE)**

(74)  Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54)  **Haftvermittelte, heisssiegelbare und peelfähige Polyesterfolie, Verfahren zu ihrer Herstellung und ihre Verwendung**

(57)  Coextrudierte, biaxial orientierte Polyesterfolien, welche eine Basisschicht (B) und eine heißsiegelbare und gegenüber APET/CPET und CPET peelfähige Deckschicht (A) aufweisen, wobei
die Deckschicht (A)

a) 60 bis 99 Gew.-% Polyester und
b) 1 bis 10 Gew.-% anorganische und/oder organische Partikel mit einem mittleren Durchmesser $d_{50}$ von 2 bis 8 μm
enthält und wobei
c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen,

und die nicht siegelfähige Oberfläche der Folie haftvermittelt ist, eignen sich als Verpackungsmaterial für Nahrungs- und Genussmittel und als Deckelfolie für APET/CPET oder CPET Menüschalen.

EP 1 529 798 A1

**Beschreibung**

Die Erfindung betrifft eine zumindest einseitig beschichtete, biaxial orientierte Polyesterfolie, die z. B. als Deckelfolie für Behälter (Menüschalen, Joghurtbecher, etc.) verwendet werden kann. Die Polyesterfolie besteht aus einer Basisschicht (B) und mindestens einer auf dieser Basisschicht (B) aufgebrachten Deckschicht (A). Die Deckschicht (A) ist heißsiegelbar und zeichnet sich z. B. durch eine leichte bis feste Peelbarkeit zu APET und CPET aus. Die erfindungsgemäße Folie besitzt mindestens eine Oberfläche, die eine gute Haftung zu anderen Polymer- oder Metall-Schichten oder Druckfarben aufweist. Die Erfindung betrifft weiterhin ein Verfahren zur Herstellung der Folie und ihre Verwendung.

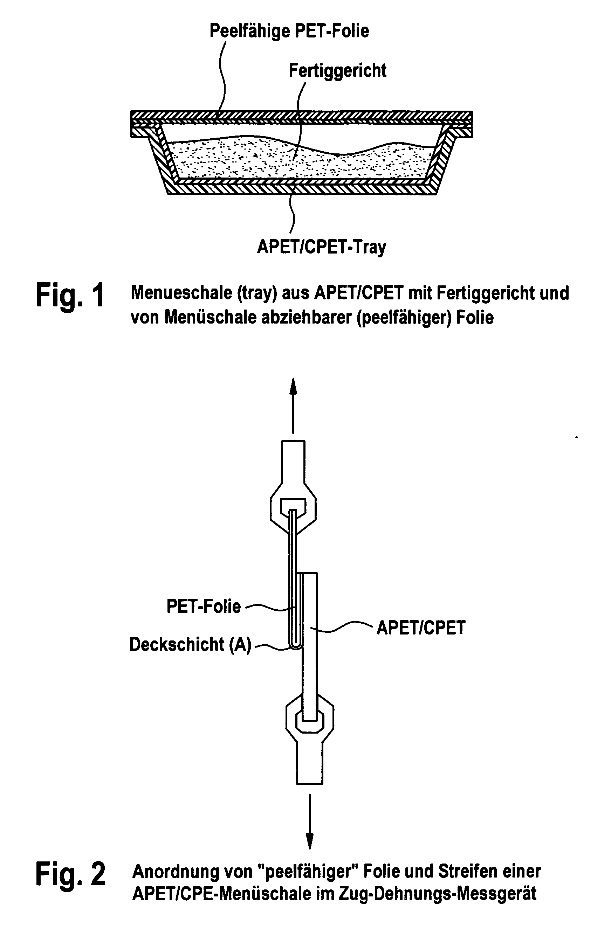

Fertiggerichte, die sich in Europa erhöhter Zuwachsraten erfreuen, werden nach ihrer Herstellung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z. B. für die Erhitzung in der Mikrowelle und im Backofen geeignet. Hierbei muss das Fertiggericht und die Verpackung "dual ovenable" (= Mikrowellen- und Backofen fähig) sein. Auf Grund der im Backofen vorherrschenden Temperaturen (bis 220 °C) werden an das Verpackungsmaterial (Menüschale und Deckelfolie) besonders hohe Anforderungen gestellt.

Typische, Mikrowellen- und Backofen fähige Materialien für die Menüschale und die Deckelfolie sind PET = Polyethylenterephthalat, CPET= kristallines PET, APET = amorphes PET.

Menüschale: CPET, Aluminium, mit PET oder mit PET-Folie beschichteter Karton oder Schalen aus APET/CPET. Menüschalen aus APET/CPET (vgl. Figur 1) bestehen außen aus einer CPET-Schicht und innen, d. h. zum Fertigmenü hin, aus einer APET-Schicht. Die dicke, kristalline CPET-Schicht liefert die Stabilität der Schale, auch bei den vergleichsweise hohen Temperaturen im Backofen. Das amorphe PET verbessert im Wesentlichen die Haftung der Folie auf der Menüschale.

Deckelfolie: Hier wird in der Regel PET verwendet, das selbst bei 220 °C formstabil und fest genug bleibt. Materialien wie PP oder PE scheiden wegen ihrer niedrigen Schmelzpunkte aus. Die Anforderungen an die Deckelfolie werden am besten von biaxial orientierten Polyesterfolien erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiter- oder abreißen. Das Abziehen der Folie von der Menüschale, ohne dass dabei die Folie ein-, weiteroder abreißt, wird in der Lebensmittelbranche mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf die Menüschale gesiegelt ist, bestimmt.

Die Peelfähigkeit von Folien lässt sich labormäßig relativ einfach mit einem Spannungs-Dehnungstester (z. B. Fa. Zwick, DE) feststellen (vgl. Figur 2). Für diesen Test werden aus der Polyesterfolie und aus der Menüschale zwei 15 mm breite und ca. 50 mm lange Streifen ausgeschnitten und gegeneinander gesiegelt. Die gesiegelten Streifen werden - wie in der Figur 2 dargestellt - in die Kluppen des Testers eingespannt. Der "Winkel" zwischen der in der oberen Kluppe eingespannten Folie und dem Menüschalenstreifen beträgt 180 °. Bei diesem Test werden die Kluppen des Testers mit einer Geschwindigkeit von 200 mm/min auseinander gefahren, wobei die Folie im günstigsten Fall von der Menüschale vollständig abgeschält (gepeelt) wird. (vgl. z. B. ASTM-B 3330).

Bei diesem Test ist im Wesentlichen zwischen zwei unterschiedlichen Mechanismen zu unterscheiden.

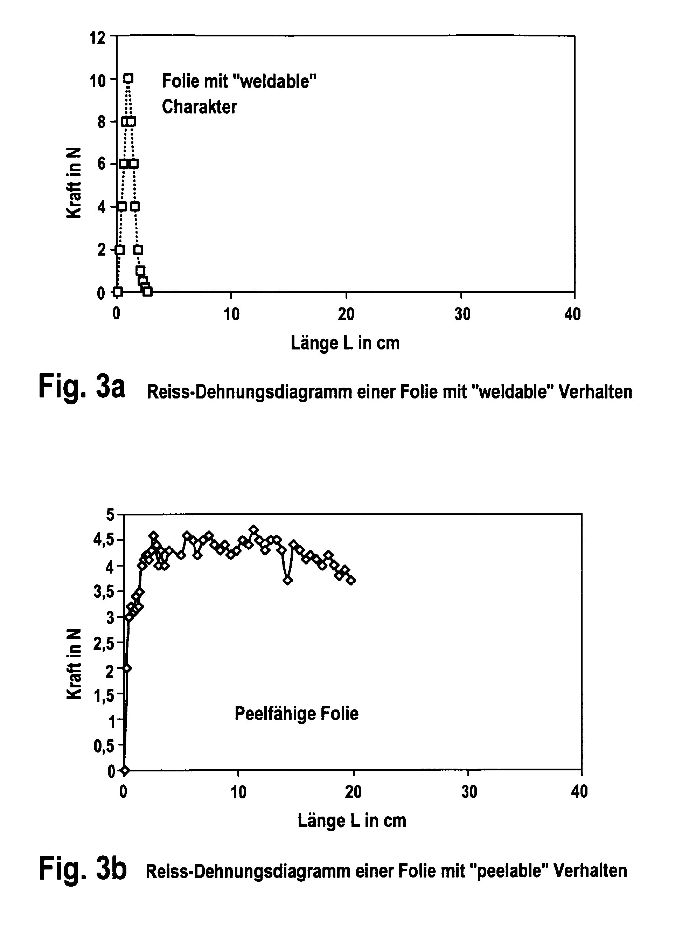

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

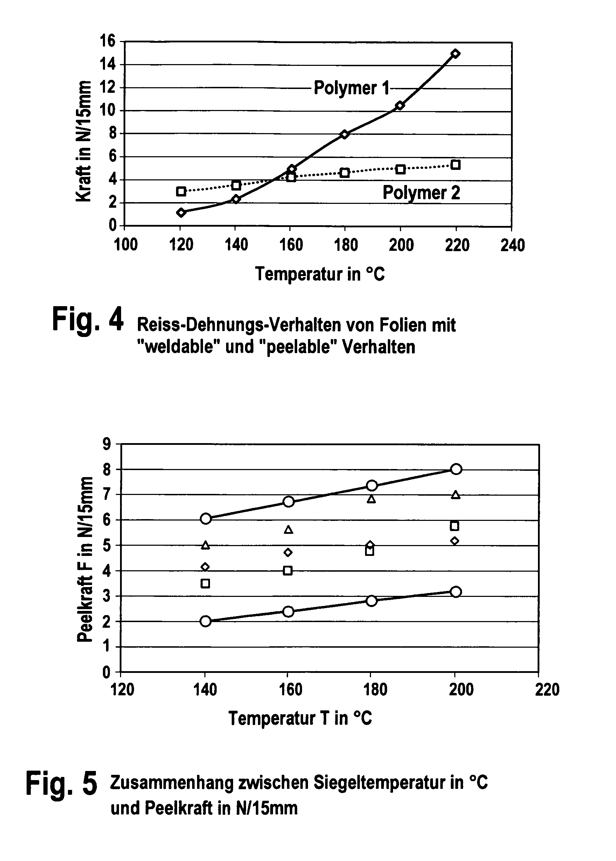

Die Höhe der Peelkraft wird in erster Linie von den in der Deckschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperaturwächst dabei die Gefahr, dass die Siegelschicht ihre Peelfähigkeit verliert. D. h. eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aber für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Die heißsiegelbare und peelfähige Schicht wird nach dem Stand der Technik in der Regel mittels sogenannter off-line Methoden (d. h. in einem zusätzlichen, der Folienherstellung nachgeordneten Prozessschritt) auf die Polyesterfolie aufgebracht. Bei dieser Methode wird zunächst eine "Standardpolyesterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet und das peelfähige Polymer bleibt als feste Schicht auf der Folie zurück.

Solch ein off-line Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte, peelfähige, heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| | |
|---|---|
| Leichte Peelbarkeit (easy peel) | Peelkraft im Bereich von ungefähr 1 bis 4 N je 15 mm Streifenbreite |
| Feste Peelbarkeit (medium peel) | Peelkraft im Bereich von ungefähr 3 bis 8 N je 15 mm Streifenbreite |
| Starke, widerstandsfähige Peelbarkeit (strong peel) | Peelkraft im Bereich von mehr als 5 N je 15 mm Streifenbreite |

Siegelbare PET-Folien und Verfahren zu deren Herstellung sind bekannt.

In der EP-A-0-379 190 wird eine biaxial orientierte, mehrschichtige Polyesterfolie umfassend eine Trägerschicht aus Polyester und mindestens eine Versiegelungsschicht aus einer Polyester-Zusammensetzung beschrieben. Die Polyesterfolie kann unter Anwendung der Coextrusionstechnologie, der In-Line Beschichtung, der In-Line Laminierung oder unter Anwendung geeigneter Kombinationen der genannten Technologien hergestellt werden. Bei der In-Line Beschichtung werden die Polymere der Versiegelungsschicht in Form einer Dispersion oder Lösung auf die Trägerschicht aufgebracht. Bei der In-Line Laminierung werden die Polymere der Versiegelungsschicht in Form von extrudierter Schmelze auf die Trägerschicht, z. B. zwischen den beiden Streckschritten, aufgebracht.

Die Versiegelungsschicht kann aliphatische und aromatische Dicarbonsäuren sowie aliphatische Diole enthalten. Das Polymer für die Versiegelungsschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= FIN-Siegelung), beträgt mehr als $400g_{force} \cdot cm/15$ mm (mehr als $4N \cdot cm/15$ mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. Die Folie zeichnet sich zwar durch gute Peeleigenschaften (mit Plateau-Charakter im Peeldiagramm s.o.) gegen sich selbst aus (d. h. Versiegelungsschicht gegen Versiegelungsschicht), über das Peelverhalten gegen Menüschalen aus APET, CPET und APET/CPET finden sich jedoch keine Hinweise. Insbesondere aber ist die Folie gemäß dieser Erfindung verbesserungswürdig in ihrer Herstell- und ihrer Verarbeitbarkeit.

In der WO A- 96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, der a) 40 bis 90 Mol-% einer aromatischen Dicarbonsäure, b) 10 bis 60 Mol-% einer aliphatischen Dicarbonsäure, c) 0,1 bis 10 Mol-% einer Dicarbonsäure enthaltend eine freie Säuregruppe oder ein Salz davon, d) 40 bis 90 Mol-% eines Glykols enthaltend 2 bis 12 Kohlenstoffatome und e) 10 bis 60 Mol-% eines Polyalkyldiols aufweist. Die Beschichtung wird aus einer wässrigen Dispersion oder einer Lösung, die bis zu 10 Gew.-% organisches Lösungsmittel enthält, an die Folie angetragen. Das Verfahren ist hinsichtlich der verwendbaren Polymere und dererzielbaren Schichtdicken für die heißsiegelbare, peelfähige Schicht eingeschränkt. Die maximal erreichbare Schichtdicke wird mit 0,5 μm angegeben. Die maximale Siegelnahtfestigkeit ist gering, sie beträgt 500 bis 600 g/25 mm$^2$, bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht in-line auf die Polyesterfolie aufgebracht wird. Angewendet wird die sogenannte Schmelze-Beschichtung (meltcoating), wobei vorzugsweise die längsgestreckte Folie mit dem heißsiegelbaren, peelfähigen Polymer beschichtet wird. Das heißsiegelbare Polymer enthält Polyester auf Basis von aromatischen und aliphatischen Säuren, sowie auf Basis von aliphatischen Diolen. Die in den Beispielen offenbarten Copolymere haben Glastemperaturen von unter -10 °C; solche Copolyester sind zu weich, weshalb sie sich nicht in üblichen Walzenstreckverfahren orientieren lassen (Kleben an den Walzen). In der WO 02/059186 A1 wird die an sich bekannte Schmelze-Beschichtung von der an sich bekannten Extrusions-Beschichtung technisch und über die Viskosität der Schmelze abgegrenzt. Nachteilig an der Schmelze-Beschichtung ist, dass nur dünnflüssige Polymere (max. 50 Pa ·s) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe der vorliegenden Erfindung war es, eine heißsiegelbare und peelfähige, biaxial orientierte Polyesterfolie bereitzustellen, bei der die Nachteile der Folien nach dem Stand der Technik möglichst weitgehend überwunden sind. Insbesondere war es auch das Ziel, einen ökonomischen Prozess für die Herstellung einer heißsiegelbaren und peelfähigen Polyesterfolie zur Verfügung zu stellen, bei dem von vornherein auf die Verwendung von toxikologisch- und Umwelt-bedenklichen Lösungsmitteln verzichtet werden kann. Die mittels des erfindungsgemäßen Verfahrens hergestellte Folie sollte sich insbesondere durch hervorragende Peeleigenschaften gegenüber Lebensmittelbehältern (Menüschalen, Becher, etc.) auszeichnen, insbesondere gegenüber solchen aus CPET, APET oder der APET-Seite von Menüschalen aus APET/CPET. Des weiteren war es ein Anliegen der Erfindung, eine Folie zur Verfügung zu stellen, die sich dadurch auszeichnet, dass

- sie gegenüber CPET oder der APET-Seite von Menüschalen aus APET/CPET eine leichte bis feste Peelbarkeit (easy peel bis medium peel) zeigt. Die Peelkraft sollte im Bereich von 1,5 bis 8 N je 15 mm, bevorzugt im Bereich von 2,0 bis 8 N je 15 mm und besonders bevorzugt im Bereich von 2,5 bis 8 N je 15 mm Folienstreifenbreite liegen;
- in der heißsiegelbaren und peelfähigen Schicht keine organischen Lösemittelrückstände enthalten sind;
- die heißsiegelbare und peelfähige Schicht gegenüber CPET oder der APET-Seite von APET/CPET Menüschalen eine Mindestsiegeltemperatur von 165 °C, bevorzugt 155 °C, insbesondere 150 °C aufweist und wobei die max. Siegeltemperatur im Allgemeinen 220 °C, bevorzugt 200 °C und besonders bevorzugt 190 °C beträgt;
- bei ihrer Herstellung Verfahren angewendet werden, bei denen von vornherein keine organischen Lösemittel verwendet werden;
- sich die Folie wirtschaftlich herstellen lässt. Dies bedeutet beispielsweise auch, dass zur Herstellung der Folie in der Industrie übliche Streckverfahren eingesetzt werden können, weiterhin sollte die Folie bei heute üblichen Maschinengeschwindigkeiten bis zu 500 m/min herstellbar sein;
- eine gute Haftung (bevorzugt größer als 2 N/15 mm Folienbreite) zwischen den einzelnen Schichten der Folie für deren praktische Anwendung gewährleistet ist;
- die optischen Eigenschaften der Folie gut sind. Dies bedeutet beispielsweise eine niedrige Trübung im Falle einer transparenten Folie (bevorzugt < 20%) und einen hohen Glanz (bevorzugt >70 für die siegelfähige Seite und bevorzugt > 100 für die der siegelfähigen gegenüberliegende Seite; jeweils gemessen bei 20° Einstrahlwinkel) der Folie;
- bei der Herstellung der Folie gewährleistet ist, dass das Regenerat in einer Menge von bis zu ca. 60 Gew.-% wieder der Extrusion zugeführt werden kann, ohne dass dabei die physikalischen (die Reißfestigkeit der Folie in beiden Richtungen sollte nicht um mehr als 10% abnehmen), insbesondere aber die optischen Eigenschaften der Folie nennenswert negativ beeinflusst werden;
- die nicht siegelbare Seite der Folie haftvermittelt ist.

Außerdem sollte dafür Sorge getragen werden, dass die Folie auf schnelllaufenden Maschinen verarbeitet werden kann. Andererseits sollten sich gleichzeitig die bekannten, Polyesterfolien auszeichnende Eigenschaften nicht verschlechtern. Hierzu gehören beispielsweise die guten mechanischen (der E-Modul der biaxial gestreckten Folien sollte in beiden Orientierungsrichtungen größer als 3500 N/mm$^2$, bevorzugt größer als 3800 N/mm$^2$ und besonders bevorzugt größer als 4200 N/mm$^2$ sein) und die thermischen Eigenschaften (der Schrumpf der biaxial gestreckten Folien sollte in beiden Orientierungsrichtungen nicht größer als 3 %, bevorzugt nicht größer als 2,8 % und besonders bevorzugt nicht größer als 2,5 % sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer mehrschichtigen, mindestens eine Basisschicht (B) aufweisenden Polyester-Folie verstanden, die zumindest eine Deckschicht (= heißsiegelbare Deckschicht) aufweist, die mittels Siegelbacken durch Anwendung von Wärme (140 bis 220 °C) und Druck (2 bis 5 bar) in einer bestimmten Zeit (0,2 bis 2 s) mit sich selbst (Fin-Siegelung), bzw. mit einem Substrat aus thermoplastischem Kunststoff (= Lap-Siegelung, hier insbesondere mit CPET oder der APET-Seite von APET/CPET-Menüschalen) verbunden werden kann, ohne dass dabei die Trägerschicht (= Basisschicht) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise PET mit einem Schmelzpunkt von 254 °C verwendet, so beträgt der Schmelzpunkt der heißsiegelbaren Schicht im Allgemeinen weniger als 230 °, im vorliegenden Fall bevorzugt weniger als 210 °C und besonders bevorzugt weniger als 190 °C.

Unter peelfähig wird hier die Eigenschaft der erfindungsgemäßen Polyester-Folie verstanden, die zumindest eine Schicht (= heißsiegelbare und peelfähige Deckschicht (A)) aufweist, die nach der Heißsiegelung auf ein Substrat (hier im Wesentlichen CPET oder die APET-Seite einer APET/CPET-Schale) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird dann ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z. B. 4 N/15 mm) an und bleibt dann über den gesamtem Schälweg in etwa konstant, ist allerdings mit mehr oder weniger großen Schwankungen behaftet (ca. ± 20 %).

Gelöst wird die Aufgabe durch die Bereitstellung einer coextrudierten, transparenten, biaxial orientierten Polyesterfolie, welche eine Basisschicht (B) und eine heißsiegelbare und zumindest gegenüber Polyester (APET und /oder CPET) peelfähige Deckschicht (A) aufweist, wobei die Deckschicht (A)

a) 60 bis 99 Gew.-% Polyester, der zu 12 bis 89 Mol-% aus Einheiten aufgebaut ist, die auf mindestens eine aromatische Dicarbonsäure und zu 11 bis 88 Mol-%aus Einheiten aufgebaut ist, die auf mindestens eine aliphatische Dicarbonsäure zurückgehen, wobei die Summe der dicarbonsäureabgeleiteten Molprozente 100 ergibt, und
b) Partikel in einer Konzentration von 1 bis 10 Gew.-% enthält, die einen mittleren Durchmesser $d_{50}$ von 2,0 bis 8,0 µm aufweisen (jeweils bezogen auf die Masse der Deckschicht (A)),

und wobei die nicht siegelfähige Oberfläche der Folie haftvermittelt ist.

Die Schichtdicke der Deckschicht (A) $d_A$ beträgt bevorzugt 1,0 bis 7,0 µm (gemessen an der biaxial orientierten Polyesterfolie).

Die oben genannten Parameter sind jeweils als bevorzugte Werte zu verstehen.

Das Material der Deckschicht (A) bzw. der Deckschichtfolie (A) besteht überwiegend aus einem Polyester. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 12 bis 89 Mol-%, insbesondere 30 bis 84 Mol-%, besonders bevorzugt 40 bis 82 Mol-%, enthalten. Die auf die aliphatischen Dicarbonsäuren zurückgehenden Einheiten sind in dem Polyester in einer Menge von bevorzugt 11 bis 88 Mol-%, insbesondere 16 bis 70 Mol-%, besonders bevorzugt 18 bis 60 Mol-%, enthalten. wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Bernsteinsäure, Pimelinsäure, Korksäure, Azelainsäure, Sebazinsäure, Glutarsäure und Adipinsäure. Insbesondere bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

12 bis 89 Mol-%, bevorzugt 25 bis 79 Mol-% und besonders bevorzugt 30 bis 72 Mol-% Terephthalat;

0 bis 25 Mol-%, bevorzugt 5 bis 20 Mol-% und besonders bevorzugt 10 bis 20 Mol-% Isophthalat;

11 bis 88 Mol -%, bevorzugt 16 bis 70 Mol-% und besonders bevorzugt 17 bis 58 Mol-% Azelat;

0 bis 50 Mol-%, bevorzugt 0 bis 40 Mol-% und besonders bevorzugt 0,2 bis 30 Mol-% Sebazat;

0 bis 50 Mol-%, bevorzugt 0 bis 40 Mol-% und besonders bevorzugt 0 bis 30 Mol-% Adipat;

mehr als 30 Mol -%, bevorzugt mehr als 40 Mol-% und besonders bevorzugt mehr als 50 Mol-% Ethylen oder Butylen.

Darüber hinaus kann das Material der Deckschicht(A) bis zu 10 Gew.-% an weiteren Additiven, Hilfsmitteln und/oder sonstigen in der Polyesterfolientechnologie üblicherweise verwendeten Zusatzstoffen enthalten.

In einer günstigen Ausführungsform enthält darüber hinaus das Material der Deckschicht(A) zu 2 bis 30 Gew.-%, bevorzugt 5 bis 25 Gew.-% und besonders bevorzugt 7 bis 20 Gew.-% ein Polymer, welches mit Polyester unverträglich ist (anti-PET-Polymer).

Es hat sich als zweckmäßig erwiesen, den Hauptpolyester der Deckschicht (A) aus zwei getrennten Polyestern I und II herzustellen, die dem(den) Extruder(Extrudern) für die Bildung dieser Schicht (Folie) als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber CPET oderderAPET-Seite von APET/CPET-Menüschalen von nicht mehr als 165 °C, bevorzugt nicht mehr als 155 °C und besonders bevorzugt nicht mehr als 150 °C und eine Siegelnahtfestigkeit gegenüber CPET oder der APET-Seite von APET/CPET Menüschalen von bevorzugt mindestens 1,5 N, insbesondere mindestens 2,0 N, besonders bevorzugt mindestens 2,5 N (immer bezogen auf 15 mm Folienbreite). Die heißsiegelbare und peelfähige Deckschicht (A) hat gegenüber CPET oder der APET-Seite von APET/CPET-Menüschalen eine maximale Siegeltemperatur von im Allgemeinen 220 C, bevorzugt 200 °C und besonders bevorzugt 190 °C, wobei im gesamten Siegelbereich eine gegenüber CPET oder der APET-Seite von APET/CPET-Menüschalen peelfähige Folie erhalten wird. D. h. mit dieser Folie wird beim 180°-Zugversuch gemäß Figur 2 eine Kurve gemäß Figur 3b erhalten. Der Begriff Menüschalen ist gleichzusetzen mit Materialien allgemein.

Für die bevorzugten, oben angegebenen Bereiche lassen sich die Peelergebnisse auch zahlenmäßig beschreiben. Entsprechend den vorliegenden experimentellen Untersuchungen können die Peelergebnisse einfach durch folgenden Zusammenhang zwischen der Siegeltemperatur (T = δ in °C) und der Peelkraft (in N/15 mm) miteinander korreliert werden

$$0{,}02 \cdot \vartheta \, / \, °C - 0{,}8 \leq \textit{PeelkraftF} \, / \, N \textit{ je } 15mm \leq 0{,}033 \cdot \vartheta \, / \, °C + 1{,}4$$

Dieser Zusammenhang ist graphisch zur Veranschaulichung in Figur 5 dargestellt.

Die Folie nach der vorliegenden Erfindung weist eine Basisschicht (B) und mindestens eine erfindungsgemäße Deckschicht (A) auf. In diesem Fall ist die Folie zweischichtig aufgebaut. In einer bevorzugten Ausführungsform ist die Folie drei - oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C); Folienaufbau A-B-C. Bei einer vierschichtigen Ausführungsform enthält die Folie eine Zwischenschicht (D) zwischen der Basisschicht (B) und der Deckschicht (A) oder (C).

Die Basisschicht der Folie besteht bevorzugt zu mindestens 80 Gew.-% aus thermoplastischem Polyester, bezogen auf das Gewicht der Basisschicht (B). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für -CH$_2$-, -C(CH$_3$)$_2$-, -C(CF$_3$)$_2$-, -O-, -S- oder -SO$_2$- steht. Daneben sind auch Bisphenole der Formel HO-C$_6$H$_4$-C$_6$H$_4$-OH gut geeignet.

Besonders vorteilhaft ist es, wenn in der Basisschicht (B) ein Polyester-Copolymer auf Basis von Terephthalat und geringen Mengen (bevorzugt < 5 Mol-%) Isophthalsäure oder auf Basis von Terephthalat und geringen Mengen (bevorzugt < 5 Mol-%) Naphthalin-2,6-dicarbonsäure verwendet wird. In diesem Fall sind die Herstellbarkeit der Folie und die optischen Eigenschaften der Folie besonders gut. Die Basisschicht (B) enthält dann im Wesentlichen ein Polyestercopolymeres, das überwiegend aus Terephthalsäure und Isophthalsäure -Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie nach der vorliegenden Erfindung ist zu mindest zweischichtig aufgebaut. Sie besteht dann aus der Basisschicht (B) und der auf dieser durch Coextrusion aufgebrachten erfindungsgemäßen siegelbaren und peelfähigen Deckschichtfolie (A).

Die bevorzugt durch Coextrusion auf die Basisschicht (B) aufgebrachte siegelbare und peelfähige Deckschichtfolie (A) ist überwiegend, d. h. bevorzugt zu mindestens 60 Gew.-% aus Polyestern aufgebaut.

Erfindungsgemäß enthält die heißsiegelbare und peelfähige Deckschichtfolie (A) Polyester auf Basis von aromatischen und aliphatischen Säuren und bevorzugt aliphatischen Diolen.

Unter den Polyestern werden in der bevorzugten Ausführungsform Copolyester oder Blends aus Homo- und Copolyestern oder Blends aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt bevorzugt 0 bis 50 Gew.-%. In der bevorzugten Ausführungsform beträgt der Anteil des Polyesters I 5 bis 45 Gew.-% und in der besonders bevorzugten Ausführungsform beträgt er 10 bis 40 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

70 bis 100 Mol-%, bevorzugt 72 bis 95 Mol-% und besonders bevorzugt 74 bis 93 Mol-% Terephthalat;
0 bis 30 Mol-%, bevorzugt 5 bis 28 Mol-% und besonders bevorzugt 7 bis 26 Mol-% Isophthalat;

mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylenterephthalat/isophthalat.

In einer weiteren bevorzugten Ausführungsform besteht der Polyester I aus einer Mischung, welche einen Copolyester, aufgebaut aus Terephthalat-, Isophthalat- und aus Ethylen-Einheiten, und ein aromatisches Polyesterhomopoymeres, z. B. ein Polybutylenterephthalat, enthält.

Entsprechend der vorliegenden Erfindung beträgt der Anteil von Polyester II in der Deckschicht (A) bevorzugt 50 bis 100 Gew.-%. In der bevorzugten Ausführungsform beträgt der Anteil von Polyester II 55 bis 95 Gew.-% und in der besonders bevorzugten Ausführungsform beträgt er 60 bis 90 Gew.-%.

Bevorzugt besteht der Polyester II aus einem Copolymeren aus aliphatischen und aromatischen Säurekomponenten, bei welchem die aliphatischen Säurekomponenten bevorzugt 20 bis 90 Mol-%, insbesondere 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) bevorzugt zumindest auf den folgenden Dicarboxylaten und Alkylenen, jeweils bezogen auf die Gesamtdicarboxylat- bzw. Gesamtalkylenmenge:

20 bis 90 Mol -%, bevorzugt 30 bis 70 Mol-% und besonders bevorzugt 35 bis 60 Mol-% Azelat;
0 bis 50 Mol-%, bevorzugt 0 bis 45 Mol-% und besonders bevorzugt 0 bis 40 Mol-% Sebazat;
0 bis 50 Mol-%, bevorzugt 0 bis 45 Mol-% und besonders bevorzugt 0 bis 40 Mol-% Adipat;
10 bis 80 Mol-%, bevorzugt 20 bis 70 Mol-% und besonders bevorzugt 30 bis 60 Mol-% Terephthalat;
0 bis 30 Mol-%, bevorzugt 3 bis 25 Mol-% und besonders bevorzugt 5 bis 20 Mol-% Isophthalat;

mehr als 30 Mol -%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) aufgelistet worden sind, oder auch von Hydroxycarbonsäuren wie Hydroxybenzoesäure o.ä.

Durch das Vorhandensein von bevorzugt mindestens 10 Mol-% aromatischer Dicarbonsäure wird gewährleistet, dass das Polymer II ohne Verklebungen, z. B. im Einzugsbereich des Extruders, für die Folie (A) verarbeitbar ist.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:

Die Mischung der beiden Polyester I und II ist von den jeweiligen Glasübergangstemperaturen ($T_g$) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einem niedrigen $T_g$ (Polyester II) weniger zum Verkleben im Coextruder als ein einziges Polymer mit einer entsprechend gemischten $T_g$. Die Polymerherstellung ist einfacher, weil man in der Regel nicht beliebig viel Dosierstationen für die Ausgangsstoffe zur Verfügung hat. Außerdem können mit der Mischung praktisch gesehen die gewünschten Peeleigenschaften individueller eingestellt werden als bei Einsatz eines einzigen Polyesters. Auch die Zugabe von Partikeln (siehe unten) gestaltet sich bei Polyester I einfacher als bei Polyester II.

Zweckmäßigerweise beträgt die Glasübergangstemperatur von Polyester I mehr als 50 °C. Bevorzugt beträgt die Glasübergangstemperatur von Polyester I mehr als 55 °C und besonders bevorzugt mehr als 60 °C. Ist die Glasübergangstemperatur von Polyester I kleiner als 50 °C, kann die Folie unter Umständen nicht verfahrenssicher hergestellt werden. Die Klebeneigung der Folie (A) z. B. gegenüber den metallischen Wänden des Extruders kann dabei so groß sein, dass mit Verstopfungen im Extruder gerechnet werden muss.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperatur von Polyester II größer als 20 °C, so neigt die Folie beim Abziehen von der Menüschale vermehrt zum Einreißen oder zum Abreißen, was unerwünscht ist.

In einer weiteren zweckmäßigen Ausgestaltung der Erfindung enthält die heißsiegelbare und peelfähige Deckschicht (A) ein mit Polyester unverträgliches Polymer (anti-PET-Polymer). Der Anteil des polyesterunverträglichen Polymeren (anti-PET-Polymer) beträgt dann bevorzugt 2 bis 30 Gew.-%, bezogen auf die Masse der Deckschicht (A).

In einer bevorzugten Ausführungsform beträgt der Anteil des Polymeren 5 bis 25 Gew.-% und in der besonders bevorzugten Ausführungsform beträgt er 7 bis 20 Gew.-%, ebenfalls bezogen auf die Masse der Deckschicht (A).

Beispiele für geeignete unverträgliche Polymere (anti-PET-Polymer) sind Polymere auf Basis von Ethylen (z. B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/ Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A-1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Für die Erfindung sind solche Cycloolefincopolymerisate (COC) besonders geeignet, die eine Glasübergangstemperatur von kleiner als 160 °C, bevorzugt kleiner als 120 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g. Folien, die ein COC mit einer Glasübergangstemperatur von kleiner als 80 °C enthalten, zeichnen sich gegenüber solchen, die ein COC mit einer Glasübergangstemperatur von größer 80 °C enthalten, durch verbesserte optische Eigenschaften, insbesondere durch eine niedrigere Trübung aus.

Die Herstellung der Cycloolefincopolymere (COC) geschieht z. B. durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z. B. Topas® (Ticona, Frankfurt).

Beträgt der Anteil des polyesterunverträglichen Polymeren (anti-PET-Polymer) weniger als 2 Gew.-%, bezogen auf die Masse der Deckschicht (A), so ist ein positiver Einfluss des Polymeren auf das Abziehverhalten der Folie von der Menüschale unter Umständen nicht gegeben. Beim Abziehen der Folie von der Menüschale kann diese nach wie vor zum Einreißen oder zum Abreißen neigen. Insbesondere bei höheren Siegeltemperaturen (> 160 °C) kommt dieser Effekt durch die Zugabe von polyesterunverträglichem Polymer (anti-PET-Polymer) besonders deutlich zum Tragen. Erfindungsgemäß hergestellte Folien reißen beim Abziehen von der Menüschale auch dann nicht ein oder ab. Andererseits sollte der Anteil von polyesterunverträglichem Polymer (anti-PET-Polymer) 30 Gew.-% nicht überschreiten, da die Trübung der Folie sonst zu hoch wird.

Zur Verbesserung der Handhabung der Folie, der Verarbeitbarkeit der Folie, insbesondere aber auch zur Verbesserung des Abziehverhaltens der Folie von der Menüschale ist es von Vorteil, die heißsiegelbare und peelfähige Deckschicht (A) weiter zu modifizieren.

Dies geschieht am Besten mit Hilfe von geeigneten Partikeln (Antiblockmitteln), die der Siegelschicht zugegeben werden und zwar in Mengen, dass sich das Abziehverhalten der Folie von der Menüschale weiter verbessert, ein Verblocken der Folie verhindert und das Verarbeitungsverhalten der Folie optimiert wird.

Es hat sich als günstig erwiesen, dass zumindest die Deckschicht (A) Partikel in einer bestimmten Größe, in einer bestimmten Konzentration und in einer bestimmten Verteilung beinhaltet. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Partikel (auch als "Pigmente" oder "Antiblockmittel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Arcrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung nicht erwünscht. Zur (synthetischen) Herstellung der $SiO_2$-Partikel (auch Silicagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann das Hydrogel getrocknet und weiterverarbeitet werden. Durch Kontrolle des Waschwasser-pH-Wertes und der Trocknungsbedingungen können die wichtigen physikalischen Parameter wie z. B. Porenvolumen, Porengröße und die Größe der Oberfläche des anfallenden Silikagels variiert werden. Die gewünschte Partikelgröße (z. B. den $d_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über die Firmen Grace, Fuji, Degussa oder Ineos bezogen werden.

Es hat sich als besonders vorteilhaft erwiesen, Teilchen mit einem mittleren Partikeldurchmesser $d_{50}$ von 2,0 bis 8 μm, bevorzugt von 2,5 bis 7 μm und besonders bevorzugt von 3,0 bis 6 μm zu verwenden. Bei der Verwendung von Teilchen mit einem Durchmesser, der unterhalb 2,0 μm liegt, ist ein positiver Einfluss der Partikel auf das Abziehverhalten der Folie von der Menüschale unter Umständen nicht gegeben. In diesem Fall neigt die Folie beim Abziehen von der Menüschale wiederum zum Ein- oder Weiterreißen, was natürlich unerwünscht ist. Teilchen mit einem Durch-messer größer als 8 μm verursachen in der Regel Filterprobleme.

In einer weiteren bevorzugten Ausführungsform ist in Deckschicht (A) der Durchmesser $d_{50}$ der Partikel größer als die Dicke dieser Schicht. Es hat sich als günstig erwiesen, ein Durchmesser/Schichtdicken-Verhältnis von bevorzugt mindestens 1,1, insbesondere mindestens 1,3 und besonders bevorzugt mindestens 1,5 zu wählen. In diesen Fällen ist ein besonders positiver Einfluss der Partikel auf das Abziehverhalten der Folie von der Menüschale gegeben.

Zur Bereitstellung der gewünschten Peeleigenschaften hat es sich als besonders günstig erwiesen, wenn die heißsiegelbare und peelfähige Deckschicht (A) Partikel in einer Konzentration von 1,0 bis 10 Gew.-% enthält. Bevorzugt beträgt die Konzentration der Partikel 2,5 bis 10,0 Gew.-% und besonders bevorzugt 4,0 bis 10,0 Gew.-%. Enthält die Deckschicht (A) der Folie dagegen Partikel in einer Konzentration von weniger als 1,0 Gew.-%, so ist ein positiver Einfluss auf das Abziehverhalten der Folie von der Menüschale unter Umständen nicht mehr gegeben. Enthält dagegen die Deckschicht (A) der Folie Partikel in einer Konzentration von mehr als 10 Gew.-%, so wird die Trübung der Folie zu groß.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von ≤ 2,0 beschrieben wird (Definition des SPAN98, siehe Messvorschrift). Bevorzugt ist ein SPAN98 von ≤ 1,9 und besonders bevorzugt ist ein SPAN98 von ≤ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich als vorteilhaft erwiesen, die Rauhigkeit der heißsiegelbaren und peelfähigen Deckschicht (A) so einzustellen, dass ihr $R_a$-Wert bevorzugt größer als 60 nm ist. Insbesondere ist die Rauhigkeit $R_a$ größer als 80 nm und besonders bevorzugt ist sie größer als 100 nm; die Obergrenze der Rauhigkeit sollte 400 nm, bevorzugt 350 nm, insbesondere 300 nm nicht überschreiten. Dies kann durch die Auswahl der Partikel- / Durchmesser, deren Konzentration und die Variation der Schichtdicke gesteuert werden.

Um das Verarbeitungsverhalten der Folie nach der vorliegenden Erfindung weiterhin zu verbessern, ist es von Vorteil, in die Basisschicht (B) bei einem zweischichtigen Folienaufbau (AB), bzw. in die nicht siegelfähige Deckschicht (C) bei einem dreischichtigen Folienaufbau (ABC) ebenfalls Partikel einzuarbeiten, wobei bevorzugt folgende Bedingungen eingehalten werden sollten:

a) Die Partikel sollten einen mittleren Partikeldurchmesser $d_{50}$ (= Median) von 1,5 bis 6 μm aufweisen. Es hat sich dabei als besonders zweckmäßig erwiesen, Teilchen mit einem mittleren Partikeldurchmesser $d_{50}$ von 2,0 bis 5 μm und besonders bevorzugt von 2,5 bis 4 μm zu verwenden.

b) Die Partikel sollten in einer Konzentration von 0,1 bis 1,0 Gew.-% vorhanden sein. Bevorzugt beträgt die Konzentration der Partikel 0,12 bis 1,0 Gew.-% und besonders bevorzugt 0,15 bis 1,0 Gew.-%.

Zur Erzielung der vorgenannten Eigenschaften, insbesondere der optischen Eigenschaften der siegelbaren und peelfähigen Folie hat es sich insbesondere bei einer dreischichtigen Folie mit ABC-Aufbau als zweckmäßig erwiesen, die Menge an Partikeln in der Basisschicht (B) niedriger einzustellen als in Deckschicht (A). Bei der dreischichtigen Folie vom genannten Typ sollte zweckmäßiger Weise in der Basisschicht (B) die Menge der Partikel zwischen 0 und 2,0 Gew.-% liegen, vorzugsweise zwischen 0 und 1,5 Gew.-%, insbesondere zwischen 0 und 1,0 Gew.-%. Als besonders zweckmäßig hat es sich erwiesen, in die Basisschicht nur Partikel einzuarbeiten, wie sie über das arteigene Regenerat (Rezyklat) in die Folie gelangen. Die optischen Eigenschaften der Folie, insbesondere die Trübung der Folie, sind dann besonders gut.

Erfindungsgemäß ist mindestens eine Folienoberfläche so behandelt, dass der Kontaktwinkel zu Wasser bevorzugt ≤ 64°, insbesondere ≤ 62°, besonders bevorzugt ≤ 60° ist.

Dies wird bevorzugt durch eine Corona- bzw. Flammbehandlung erreicht, die sich üblicherweise an die Thermofixierung der Folie anschließt. Ebenso kann die Behandlung an anderen Stellen im Folienherstellprozess, beispielsweise vor oder nach der Längsstreckung, erfolgen. Alternativ oder zusätzlich zu der oben beschriebenen Oberflächenbehandlung kann die Folie auf der nicht siegelfähigen Oberfläche mit einer funktionalen Beschichtung beschichtet werden, so dass die Beschichtung auf der fertigen Folie eine Dicke von bevorzugt 5 bis 2000 nm, bevorzugt 20 bis 500, insbesondere 30 bis 200 nm aufweist. Die Beschichtung wird bevorzugt In-line aufgebracht, d. h. während des Folienherstellprozesses, zweckmäßigerweise vor der Querstreckung. Besonders bevorzugt ist die Aufbringung mittels des "Reverse gravure-roll coating" Verfahrens, bei dem sich die Beschichtung äußerst homogen in Schichtdicken bis 100 nm auftragen lässt. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion.

Die genannten Beschichtungen verleihen der Folienoberfläche eine zusätzliche Funktion; beispielsweise wird die Folie dadurch siegelfähig, bedruckbar, metallisierbar, sterilisierbar, antistatisch oder sie verbessern z. B. die Aromabarriere oder ermöglichen die Haftung zu Materialien, die ansonsten nicht auf der Folienoberfläche haften würden.

Beispiele für Stoffe/Zusammensetzungen, die zusätzliche Funktionalität verleihen sind: Acrylate, wie sie bspw. beschrieben sind in der W094/13476, Ethylvinylalkohole, PVDC, Wasserglas ($Na_2SiO_4$), hydrophilische Polyester (5-Na-sulfoisophthalsäurehaltiger PET/IPA Polyester, wie sie bspw. beschrieben sind in der EP-A-0144878, US-A-4252885 oder EP-A-0296620), Polyvinylacetate, wie sie bspw. beschrieben sind in der W094/13481, Polyurethane, Alkali- oder Erdalkalisalze von $C_{10}$-$C_{18}$-Fettsäuren, Butadiencopolymere mit Acrylnitril oder Methylmethacrylat, Methacrylsäure oder deren Ester.

Die genannten Stoffe/Zusammensetzungen werden z. B. als verdünnte Lösung, Emulsion oder Dispersion vorzugsweise als wässrige Lösung, Emulsion oder Dispersion auf eine oder beide Folienoberflächen aufgebracht und anschliessend das Lösungsmittel verflüchtigt. Werden die Beschichtungen In-line vor der Querstreckung aufgebracht, reicht gewöhnlich die Temperaturbehandlung in der Querstreckung aus, um das Lösungsmittel zu verflüchtigen und die Beschichtung zu trocknen. Die getrockneten Beschichtungen haben dann Schichtdicken von 5 bis 2000 nm, bevorzugt 20 bis 500 nm, insbesondere 30 bis 200 nm.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von a) Isophthalsäure, b) einer aliphatischen Dicarbonsäure mit der Formel

$$HOOC(CH_2)_nCOOH,$$

wobei n im Bereich von 1 bis 11 liegt, c) einem Sulfomonomeren enthaltend eine Alkalimetallsulfonatgruppe an dem aromatischen Teil einer aromatischen Dicarbonsäure und d) wenigstens einem aliphatischen oder cycloaliphatischen Alkylenglykol mit etwa 2 bis 11, bevorzugt 2 bis 8, besonders bevorzugt 2 bis 6 Kohlenstoffatomen hergestellt. Die insgesamt anwesenden Säureäquivalente sollen auf molarer Basis im wesentlichen den insgesamt anwesenden Glykoläquivalenten entsprechen.

Es hat sich gezeigt, dass die verhältnismässigen Anteile der Komponenten a) bis d), die zur Herstellung der bevorzugten Copolyesterbeschichtungen eingesetzt werden, wichtig für das Erzielen einer beschichteten Folie mit zufriedenstellender Haftung sind. So sollte bevorzugt z. B. Isophthalsäure (Komponente a) zu mindestens etwa 65 Mol-% als Säurekomponente anwesend sein. Bevorzugt ist die Komponente a) reine Isophthalsäure, die in einer Menge von etwa 70 bis 95 Mol-% anwesend ist. Für die Komponente b) gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure oder Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente b) in der Zusammensetzung enthalten ist. Das die Komponente c) der bevorzugten Copolyesterbeschichtung bildende Monomere sollte bevorzugt in einer Menge von wenigstens 5 Mol-% in diesem System enthalten sein, damit die Grundierung mit Wasser dispergierbar wird. Besonders bevorzugt liegt die Menge an Monomerem der Komponente c) bei etwa 6,5 bis 12 Mol-%. Die Glykolkomponente d) ist in ungefähr stöchiometrischer Menge anwesend.

In einer weiteren bevorzugten Ausführungsform der Erfindung wird eine Acrylatbeschichtung zur Erzielung der besseren Haftung verwendet. Die bevorzugt verwendeten Acrylcopolymeren bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterfolie und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat-Comonomere vorzugsweise in einem Anteil, der im allgemeinen um 5 bis 20 Mol-% grösser ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können zur Ausbildung von Vernetzungen geeignete Comonomere eingesetzt werden wie z. B. N- Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie des wegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales Si02 usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann insbesondere auf drei Weisen erzielt werden:

1. eine Mischung aus einem aromatischen Copolyester (I-1) mit einer in Wasser dispergierbaren funktionellen Gruppe und einem Polyvinylalkohol (II-1);
2. eine Mischung aus einem aromatischen Copolyester (I-2) mit einer in Wasser dispergierbaren funktionellen Gruppe und einem Polyglycerolpolyglycidylether (II-2); oder
3. eine Mischung aus einem wässrigen Polyurethan (I-3) und einem Polyvinylalkohol (II-3).

Die aromatischen Copolyester (I-1 und I-2) werden aus aromatischen Dicarbonsäuren wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9% betragen. Als Polyglycerolpolyglycidylether (II-2) werden Reaktionsprodukte von Glycerin und Epichlorhydrin mit Molekulargewichten zwischen ca. 250 und 1200 verwendet. Das wässrige Polyurethan (I-3) wird aus einem Polyol, wie zum Beispiel Polyester mit Glykol-Endgruppen, Polyoxyethylenglykol, Polyoxypropylenglykol, Polyoxytetramethylenglykol oder acrylische Polyole, und einem Diisocyanat, wie zum Beispiel Xyloldiisocyanat, Hexamethylendiisocyanat, 4,4'- Dicycloheylmethandiisocyanat, Toluidindiisocyanat, Phenylendiisocyanat, 4,4'- Diphenylmethandiisocyanat und 1,5-Naphthalindiisocyanat, hergestellt.

Die bevorzugten Copolyester-, Acrylat- und hydrophilen Beschichtungen können weiterhin andere bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. (s. z. B. EP-A-0 144 948 = US 4,571,363, EP-A-0 144 878 = US 4,493,872).

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 μm und liegt vorzugsweise im Bereich von 0,5 bis 15 μm, insbesondere im Bereich von 1,0 bis 10 μm, besonders bevorzugt im Bereich von 1,0 bis 5 μm.

Bei der zweischichtigen und der besonders vorteilhaften dreischichtigen Ausführungsform der erfindungsgemäßen biaxial orientierten Polyesterfolie liegt die Dicke der Deckschicht (A) im Bereich von 1,0 bis 7,0 μm, bevorzugt im Bereich von 1,3 bis 6,5 μm und besonders bevorzugt im Bereich von 1,6 bis 6,0 μm. Beträgt die Dicke der Deckschicht (A) mehr als 7,0 μm, so wächst die Peelkraft deutlich an und liegt nicht mehr im bevorzugten Bereich. Darüber hinaus wird das Peelverhalten der Folie beeinträchtigt. Beträgt die Dicke der Deckschicht (A) dagegen weniger 0,8 μm, so ist die Folie in der Regel nicht mehr heißsiegelbar.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 μm.

Die Gesamtdicke der erfindungsgemäßen Polyesterfolie kann innerhalb weiter Grenzen variieren. Sie beträgt bevorzugt 3 bis 200 μm, insbesondere 4 bis 150 μm, vorzugsweise 5 bis 100 μm, wobei die Schicht (B) einen Anteil von vorzugsweise 45 bis 97 % an der Gesamtdicke hat.

Die Basisschicht und die anderen Schichten können zusätzlich übliche Additive wie z. B. Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt.

Gegenstand der vorliegenden Erfindung ist auch ein Verfahren zur Herstellung der Folie. Zur Herstellung der erfindungsgemäßen heißsiegelbaren und peelfähigen Deckschicht (A) werden zweckmäßiger Weise die jeweiligen Polymere (Polyester I, Polyester II, ggf. polyesterunverträgliches Polymer [anti-PET-Polymer] und weitere Polymere wie z. B. Masterbatch(e) für Partikel) direkt dem Extruder für die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders günstig erwiesen, wenn die Extrusion der Polymere für die Deckschicht (A) mit einem Zweischneckenextruder mit Entgasungsmöglichkeit durchgeführt wird.

Die Polymere für die Basisschicht (B) und für die eventuell vorhandene weitere Deckschicht (C) und gegebenenfalls die Zwischenschicht werden zweckmäßig über weitere Extruder dem (Coextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung der Folie wird im Allgemeinen sequentiell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von ca. 60 bis 130 °C (Aufheiztemperaturen 60 bis 130 °C), und in Querrichtung (transverse direction orientation = TDO) in einem Temperaturbereich von ca. 90 °C (Beginn der Streckung) bis 140 °C (Ende der Streckung) durchgeführt. Das Längsstreckverhältnis liegt bevorzugt im Bereich von 2,0:1 bis 5,5:1, insbesondere von 2,3:1 bis 5,0:1. Das Querstreckverhältnis liegt bevorzugt im Bereich von 2,4:1 bis 5,0:1, insbesondere von 2,6:1 bis 4,5:1.

Der bevorzugte Temperaturbereich, bei der die biaxiale Streckung durchgeführt wird, beträgt bei der Längsstreckung (MDO) 60 bis 120 °C. Die Aufheiztemperaturen der Folie in der Längsstreckung liegen dabei in einem Bereich von 60 bis 115 °C. Bei der Querstreckung (TDO) liegen die Temperaturen der Folie bevorzugt in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 5,0:1, bevorzugt von 2,3:1 bis 4,8:1. Das Querstreckverhältnis liegt allgemein im Bereich von 2,4:1 bis 5,0:1, bevorzugt von 2,6:1 bis 4,5:1.

Der besonders bevorzugte Temperaturbereich, bei der die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 4,8:1, bevorzugt von 2,3:1 bis 4,6:1. Das Querstreckverhältnis liegt allgemein im Bereich von 2,4:1 bis 5,0:1, bevorzugt von 2,6:1 bis 4,5:1.

Mit den bevorzugten und insbesondere mit den besonders bevorzugten Temperaturen in der MDO wird dem klebrigen Verhalten von Deckschicht (A) auf Walzen (metallische, keramische oder besonders beschichtete Walzenoberflächen) besonders gut Rechnung getragen.

Vor der Querstreckung kann erfindungsgemäß die nicht siegelfähige Oberfläche der Folie nach den an sich bekannten Verfahren In-Line beschichtet werden. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen.

Bei der nachfolgenden Thermofixierung wird die Folie über eine Zeitdauer von etwa 0,1 bis 10 s bei einer Temperatur von bevorzugt 150 bis 250 °C gehalten. Anschließend wird die Folie in üblicher Weise aufgewickelt.

Der Glanz der Folienoberfläche (B) im Falle einer zweischichtigen Folie bzw. der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung.

Die Trübung der Folie ist bevorzugt kleiner als 20 %. In einer bevorzugten Ausführungsform beträgt die Trübung der Folie weniger als 16 % und in einer besonders bevorzugten Ausführungsform weniger als 12 %.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich z. B. hervorragend zum Verpacken von Nahrungs- und Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten bevorzugten Folieneigenschaften noch einmal zusammen.

## Tabelle 1

| Deckschicht (A) | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut aus aromatischen Dicarbonsäuren | 12 bis 89 | 30 bis 84 | 40 bis 82 | Mol.-% | |
| Anteil Einheiten im erfindungsgemäßen Polyester, aufgebaut aus aliphatischen Dicarbonsäuren | 11 bis 88 | 16 bis 70 | 18 bis 60 | Mol.-% | |
| Polyester I | 0 bis 50 | 5 bis 45 | 10 bis 40 | Gew.-% | |
| Polyester II | 50 bis 100 | 55 bis 95 | 60 bis 90 | Gew.-% | |
| Partikeldurchmesser $d_{50}$ | 2,0 bis 8 | 2,5 bis 7 | 3,0 bis 6 | µm | |
| Füllstoffkonzentration | 1,0 bis 10,0 | 2,5 bis 10,0 | 4,0 bis 10,0 | Gew.-% | |
| Dicke der Deckschicht A | 1,0 bis 7,0 | 1,3 bis 6,5 | 1,6 bis 6,0 | µm | |
| Partikeldurchmesser/Schichtdicken-Verhältnis | >/= 1,1 | >/= 1,3 | >/= 1,5 | | |
| **Eigenschaften** | | | | | |
| Dicke der Folie | 3 bis 200 | 4 bis 150 | 5 bis 100 | µm | |
| Mindestsiegeltemperatur von (A) gegen APET/CPET-Menüschalen | 165 | 155 | 150 | °C | |
| Siegelnahtfestigkeit von (A) gegen APET/CPET-Menüschalen | 1,5 bis 8 | 2,0 bis 8 | 2,5 bis 8 | N/15 mm | |
| Glanz der Deckschichten A und C | > 70 und > 100 | > 75 und > 110 | > 80 und > 120 | | DIN 67530 |
| Trübung der Folie | < 20 | < 16 | < 12 | % | ASTM D 1003-52 |
| Kontaktwinkel Wassser | >/= 64 | >/= 62 | >/= 60 | ° | s. Beschreibung |

>/= : größer/gleich

Zur Charakterisierung der Rohstoffe und der Folien wurden im Rahmen der vorliegenden Erfindung die folgenden Messmethoden benutzt:

Messung des mittleren Durchmessers $d_{50}$

Die Bestimmung des mittleren Durchmessers $d_{50}$ wurde mittels Laser auf einem Malvern Master Sizer (Fa. Malvern Instruments Ltd., UK) mittels Laserscannung durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert (auch Median genannt).

Messung der SPAN98

Die Bestimmung des Streumaßes, der SPAN98, wurde mit dem gleichen Messgerät durchgeführt, wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Der Ermittlung von $d_{98}$ und $d_{10}$ wird wiederum die (relative) Summenkurve der Partikelgrößenverteilung (s. o., Messung des mittleren Durchmessers $d_{50}$) zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes mit der Summenkurve liefert auf der Abszissenachse den gewünschten $d_{10}$-Wert.

SV-Wert

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \cdot 1000.$$

Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

Siegelnahtfestigkeit (Peelkraft)

Zur Bestimmung der Siegelnahtfestigkeit wird ein Folienstreifen (100 mm lang x 15 mm breit) auf die APET-Seite eines entsprechenden Streifens der APET/CPET-Menüschale gelegt und bei der eingestellten Temperatur von ≥ 140 °C, einer Siegelzeit von 0,5 s und einem Siegeldruck von 4 bar (Siegelgerät HSG/ET der Firma Brugger, DE), beidseitig beheizte Siegelbacke) gesiegelt. Entsprechend Figur 2 werden die gesiegelten Streifen in die Zugprüfmaschine (z. B. Fa. Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

Bestimmung der Mindestsiegeltemperatur

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180° Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1 N/15 mm erreicht wird.

Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

Trübung

Die Trübung nach Hölz wurde nach ASTM-D 1003-52 bestimmt.

Glanz

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Reißfestigkeit

Die Reißfestigkeit der Folie wurde nach DIN 53455 gemessen. Die Prüfgeschwindigkeit ist 1 %/min; 23 °C; 50 % r.F.

E-Modul

Der E-Modul der Folie wurde nach DIN 53457 gemessen. Die Prüfgeschwindigkeit ist 1 %/min; 23 °C; 50 % r.F.

Kontaktwinkel mit Wasser

Die Polarität der Oberfläche wurde durch eine Randwinkelmessung von destilliertem Wasser bestimmt. Die Messung fand bei 23 DEG C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, sodass der Tropfen während der Messung vorsichtig vergrößert und dann sofort mittels eines Goniometerokulars der Kontaktwinkel abgelesen wird. (Messung des Fortschreitwinkels). Aus 5 Messungen wird der Mittelwert gebildet. (vgl. z. B. ASTM-D 5946-01).

Im Folgenden wird die Erfindung anhand von Beispielen näher erläutert.

Beispiel 1

Chips aus Polyethylenterephthalat wurden dem Extruder für die Basisschicht (B) zugeführt. Ebenfalls wurden Chips aus Polyethylenterephthalat und Partikel dem Extruder (Zweischneckenextruder) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.

Daneben wurde für die heißsiegelbare und peelfähige Deckschicht (A) eine Mischung bestehend aus Polyester I und Polyester II hergestellt. Die Mischung wurde dem Zweischneckenextruder mit Entgasung für die siegelbare und peelfähige Deckschicht (A) zugeführt. Entsprechend den in untenstehender Tabelle angeführten Verfahrensbedingungen wurden die Rohstoffe in dem Zweischneckenextruder aufgeschmolzen und homogenisiert.

Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung, Fixierung und anschließender Coronabehandlung (2 kW/m$^2$) der C-Schicht eine transparente, dreischichtige Folie mit ABC-Aufbau in einer Gesamtdicke von 25 µm hergestellt. Die Dicke der Deckschichte A beträgt 2 µm, die der Deckschicht C 1 µm.

Deckschicht (A), Mischung aus:

20,0 Gew.-%     Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75 °C. Polyester I enthält darüber hinaus 6,0 Gew.-% ®Sylysia 430 (synthetisches $SiO_2$, Fuji, Japan) mit einem Partikeldurchmesser von $d_{50}$ = 3,4 µm, SPAN98 = 1,8;

80 Gew.-%     Polyester II (= Copolymeres enthaltend 40 Mol-% Ethylenazelat, 50 Mol-% Ethylenterephthalat, 10 Mol-% Ethylenisophthalat) mit einem SV-Wert von 1000. Die Glasübergangstemperatur von Polyester II beträgt ca. 0 °C.

Basisschicht (B):

100 Gew.-%     Polyethylenterephthalat mit einem SV-Wert von 800

Deckschicht (C), Mischung aus:

85 Gew.-%     Polyethylenterephthalat mit einem SV-Wert von 800;

15 Gew.-%     Masterbatch aus 99 Gew.-% Polyethylenterephthalat (SV-Wert von 800) und 1,0 Gew.-% Sylobloc® 44 H (synthetisches $SiO_2$, Fa. Grace, Worms), $d_{50}$ = 2,5 µm, SPAN98 = 1,9.

Die Herstellungsbedingungen in den einzelnen Verfahrensschritten waren:

| Extrusion | Temperaturen | A-Schicht: | 230 | °C |
|---|---|---|---|---|
|  |  | B-Schicht: | 280 | °C |
|  |  | C-Schicht: | 280 | °C |
|  | Temperatur der Abzugswalze |  | 20 | °C |
| Längsstreckung | Aufheiztemperatur |  | 70-100 | °C |
|  | Strecktemperatur |  | 102 | °C |
|  | Längsstreckverhältnis |  | 3,8 |  |
| Querstreckung | Aufheiztemperatur |  | 105 | °C |
|  | Strecktemperatur |  | 135 | °C |
|  | Querstreckverhältnis |  | 4,0 |  |
| Fixierung | Temperatur |  | 230 | °C |
|  | Dauer |  | 3 | s |

Laut Messungen (Tabelle 2), beträgt die Mindestsiegeltemperatur der Folie gegenüber der APET-Seite von APET/CPET-Menüschalen 120 °C. Die Folie wurde bei 140, 160, 180 und 200 °C gegen die APET-Seite von APET/CPET-Menüschalen gesiegelt (Siegeldruck 4 bar, Siegelzeit 0,5 s). Anschließend wurden Streifen des Verbundes aus erfindungsgemäßer Folie und APET/CPET-Menüschale mittels Spannungs-Dehnungstester entsprechend der vorgenannten Messvorschrift (vgl. Figur 2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden peelfähige Folien erhalten. Die Siegelnahtfestigkeiten gegenüber APET liegen im mittleren Bereich, d. h. dass sich die Folien ohne große Kraftanstrengung von der Menüschale abziehen lassen. Weiterhin hatte die Folie die geforderten guten optischen Eigenschaften, die Trübung betrug 5 %, der Glanz der Seiten A bzw. C betrug 120 bzw. 130. Die Folie hatte die gewünschte verbesserte Haftung, der Kontaktwinkel zu Wasser betrug 63,7°. Die Folie hatte das gewünschte Handling und Verarbeitungsverhalten.

## Tabelle 2

| Siegelnahtfestigkeit gegenüber APET/CPET-Menüschalen | | | | Siegelnahtfestigkeit gegenüber CPET-Menüschalen | | | | Rauhigkeiten | |
|---|---|---|---|---|---|---|---|---|---|
| 140°C | 160°C | 180°C | 200°C | 140°C | 160°C | 180°C | 200°C | Seite A | Seite C |
| N/15 mm | | | | N/15 mm | | | | µm | |
| 4 | 4,7 | 5 | 5,2 | 3,4 | 3,9 | 4,2 | 4,6 | 169 | 60 |

Beispiel 2

Die Folie wurde wie in Beispiel 1 hergestellt, jedoch ohne Coronabehandlung nach dem biaxialen Strecken. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid wurde nach dem folgenden Verfahren als Haftvermittlerbeschichtung auf die C-Schicht der Polyesterfolie aufgebracht: Die längsgestreckte Folie wurde coronabehandelt (8 kW/m²) und danach durch Reversgravurbeschichtung auf der C-Schicht mit dem oben beschriebenen Latex beschichte.

Die biaxial gestreckte Folie wurde bei 230 °C thermofixiert. Das Trockengewicht der Beschichtung betrug ca. 0,035 g/m² bei einer Beschichtungsdicke von etwa 0,0025 µm.

Die Siegel- und Peeleigenschaften der Folie sind wie in Beispiel 1. Der Kontaktwinkel zu Wasser betrug 63,8°. Die Folie wurde auf ihre reprografische Haftung geprüft und ergab eine gute Haftung.

Beispiel 3

Die Folie wurde wie in Beispiel 2 hergestellt. Eine wässrige Dispersion mit 6 Gew.-% Copolyester, bestehend aus 95 Mol-% Isophthalat, 5 Mol-% Na-5-Sulfoisophtalat und 100 Mol-% Ethylenglykol, und 0,56 Gew.-% kolloidalem $SiO_2$ wurde nach dem folgenden Verfahren als Beschichtung auf eine Polyesterfolie aufgebracht:

Die längsgestreckte Folie wurde durch Reversgravurbeschichtung auf der C-Schicht mit der oben beschriebenen Copolyesterdispersion beschichtet.

Die biaxial gestreckte Folie wurde bei 230°C thermofixiert. Das Trockengewicht der Beschichtung betrug ca. 0,030 g/m² bei einer Beschichtungsdicke von etwa 0,0025 µm.

Die Siegel- und Peeleigenschaften der Folie waren wie in Beispiel 1. Der Kontaktwinkel zu Wasser betrug 57°.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden etwa 500 ANGSTROM Aluminium sowohl auf die unbeschichtete Seite als auch auf die beschichtete Probe aufgedampft.

Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und in etwa dem gleichen Druck leicht über die Metalloberfläche gerieben. Das "Abriebverhalten" der beschichteten Seite der Folie wurde als gut bewertet.

Beispiel 4

Die Folie wurde wie in Beispiel 1 hergestellt, jedoch ohne Coronabehandlung nach dem biaxialen Strecken. Eine wässrige Dispersion mit 7 Gew.-% Feststoffgehalt, bestehend aus 50 Gew.-% des aromatischen Copolyesters A1 (Copolyester enthaltend 90 Mol-% Terephthalat, 10 Mol-% 5-Natriumsulfoisophtalat, 80 Mol-% Ethylenglykol und 20 Mol-% Diethylenglykol), 45 Gew.-% des wasserdispergierbaren Polymers B2 (Polyvinylalkohol mit einem Verseifungsgrad von 88 Mol-% und einem Polymerisationsgrad von 1.700) und 5 Gew.-% an inerten Partikeln D1 (kolloidales $SiO_2$ mit einem Partikeldurchmesser von 0,05 µm) wurde nach dem folgenden Verfahren als Beschichtung auf eine Polyesterfolie aufgebracht:

Die längsgestreckte Folie wurde durch Reversgravurbeschichtung mit der oben beschriebenen Copolyesterdispersion beschichtet. Das Trockengewicht der Beschichtung betrug ca. 0,040 g/m² bei einer Beschichtungsdicke von etwa 0,05 µm.

Die Siegel- und Peeleigenschaften der Folie waren wie in Beispiel 1. Der Kontaktwinkel zu Wasser war kleiner als 50°.

Zur Beurteilung der Haftvermittlerwirkung der Beschichtung wurde eine wässrige Polyvinylacetal-Lösung (S-Lec KX-1, hergestellt von Sekisui Chemical Co., Ltd, Japan, im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 μm aufgebracht. Die beschichtete Folie wurde unverzüglich zum Trocknen bei 100 DEG C f 4 Minuten in einen Ofen gestellt. Ein schwarzes Quadrat (Fläche: 12 x 12 cm) wurde mit einem Ink-jet-Drucker (BJC-600J, Canon Inc.) auf die Oberfläche der getrockneten KX-1 Beschichtung gedruckt und für 12 Stunden bei 23 DEG C und 50 % relativer Luftfeuchtigkeit unter Luft getrocknet. Ein Klebeband (Cello-tape, Nichiban Inc. Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

Vergleichsbeispiel 1

Eine Folie wie aus Beispiel 1 wurde hergestellt, jedoch ohne Coronabehandlung. Der Kontaktwinkel zu Wasser betrug 65,5° und die Haftung zu Metall war schlecht.

**Patentansprüche**

1. Coextrudierte, biaxial orientierte Polyesterfolie, welche eine Basisschicht (B) und eine heißsiegelbare und gegenüber APET/CPET und CPET peelfähige Deckschicht (A) aufweist, wobei die Deckschicht (A)

   a) 60 bis 99 Gew.-% Polyester und
   b) 1 bis 10 Gew.-% anorganische und/oder organische Partikel mit einem mittleren Durchmesser $d_{50}$ von 2 bis 8 μm
   enthält und wobei
   c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen,

   wobei die Summe der dicarbonsäureabgeleiteten Molprozente 100 ergibt und die nicht siegelfähige Oberfläche der Folie haftvermittelt ist.

2. Polyesterfolie nach Anspruch 1, **dadurch gekennzeichnet, dass** die Schichtdicke der Deckschicht (A) $d_A$ 1 bis 7 μm beträgt.

3. Polyesterfolie nach Anspruch 1 oder 2, **dadurch gekennzeichnet, dass** die aromatischen Dicarbonsäuren ausgewählt sind aus einer oder mehreren der folgenden Substanzen: Terephthalsäure, Isophthalsäure und 2,6-Naphthalindicarbonsäure.

4. Polyesterfolie nach einem oder mehreren der Ansprüche 1 bis 3, **dadurch gekennzeichnet, dass** die aliphatischen Dicarbonsäuren ausgewählt sind aus einer oder mehreren der folgenden Substanzen: Bernsteinsäure, Pimelinsäure, Korksäure, Azelainsäure, Sebazinsäure, Glutarsäure und Adipinsäure.

5. Polyesterfolie nach einem oder mehreren der Ansprüche 1 bis 4, **dadurch gekennzeichnet, dass** der Polyester der Deckschicht (A) 12 bis 89 Mol-% Terephthalat, 0 bis 25 Mol-% Isophthalat, 11 bis 88 Mol-% Azelat, 0 bis 50 Mol-% Sebazat, 0 bis 50 Mol-% Adipat und mehr als 30 Mol-% Ethylen oder Butylen enthält, jeweils bezogen auf die Gesamtdicarboxylat- bzw. Gesamtalkylenmenge.

6. Polyesterfolie nach einem oder mehreren der Ansprüche 1 bis 5, **dadurch gekennzeichnet, dass** die Deckschicht (A) eine Mindestsiegeltemperatur gegenüber APET/CPET oder CPET Menüschalen von nicht mehr als 165 °C aufweist.

7. Polyesterfolie nach einem oder mehreren der Ansprüche 1 bis 6, **dadurch gekennzeichnet, dass** die Deckschicht (A) eine Siegelnahtfestigkeit gegenüber APET/CPET oder CPET Menüschalen von mindestens als 1,5 N/15 mm Folienbreite aufweist.

**8.** Polyesterfolie nach einem oder mehreren der Ansprüche 1 bis 7, **dadurch gekennzeichnet, dass** der Polyester der Deckschicht (A) aus zwei Polyestern I und II hergestellt wird.

**9.** Polyesterfolie nach einem oder mehreren der Ansprüche 1 bis 8, **dadurch gekennzeichnet, dass** der Polyester I aus einem oder mehreren aromatischen Dicarboxylaten und einem oder mehreren aliphatischen Alkylenen besteht.

**10.** Polyesterfolie nach einem oder mehreren der Ansprüche 1 bis 9, **dadurch gekennzeichnet, dass** der Polyester I Terephthalat-, Isophthalat- und Ethyleneinheiten enthält.

**11.** Polyesterfolie nach einem oder mehreren der Ansprüche 1 bis 10, **dadurch gekennzeichnet, dass** der Anteil des Polyesters I in der Deckschicht (A) 0 bis 50 Gew.-% beträgt.

**12.** Polyesterfolie nach einem oder mehreren der Ansprüche 1 bis 11, **dadurch gekennzeichnet, dass** der Polyester I eine Glasübergangstemperatur von mehr als 50 °C aufweist.

**13.** Polyesterfolie nach einem oder mehreren der Ansprüche 1 bis 12, **dadurch gekennzeichnet, dass** der Polyester II aus einem oder mehreren aliphatischen und aus einem oder mehreren aromatischen Dicarboxylaten und aus einem oder mehreren aliphatischen Alkylenen besteht.

**14.** Polyesterfolie nach einem oder mehreren der Ansprüche 1 bis 13, **dadurch gekennzeichnet**, das der Polyester II Azelat-, Terephthalat-, Isophthalat- und Ethyleneinheiten enthält.

**15.** Polyesterfolie nach einem oder mehreren der Ansprüche 1 bis 14, **dadurch gekennzeichnet, dass** der Anteil des Polyesters II in der Deckschicht (A) 50 bis 100 Gew.-% beträgt.

**16.** Polyesterfolie nach einem oder mehreren der Ansprüche 1 bis 15, **dadurch gekennzeichnet, dass** der Polyester II eine Glasübergangstemperatur von weniger als 20 °C aufweist.

**17.** Polyesterfolie nach einem oder mehreren der Ansprüche 1 bis 16, **dadurch gekennzeichnet, dass** die Folie dreischichtig ist und einen A-B-C-Aufbau aufweist.

**18.** Polyesterfolie nach einem oder mehreren der Ansprüche 1 bis 17, **dadurch gekennzeichnet, dass** neben der Deckschicht (A) auch die Deckschicht (C) anorganische oder organische Partikel enthält.

**19.** Polyesterfolie nach einem oder mehreren der Ansprüche 1 bis 18, **dadurch gekennzeichnet, dass** die Partikel in der Deckschicht (A) einen SPAN 98 von ≤ 2,0 aufweisen.

**20.** Polyesterfolie nach einem oder mehreren der Ansprüche 1 bis 19, **dadurch gekennzeichnet, dass** die Basisschicht (B) zu mindestens 80 Gew.-% aus thermoplastischem Polyester besteht.

**21.** Polyesterfolie nach einem oder mehreren der Ansprüche 1 bis 20, **dadurch gekennzeichnet, dass** der Polyester der Basisschicht (B) Terephthalat- und/oder Isophthalat- und Ethyleneinheiten enthält.

**22.** Polyesterfolie nach einem oder mehreren der Ansprüche 1 bis 21, **dadurch gekennzeichnet, dass** die Haftvermittlung für die nicht siegelfähige Folienoberfläche durch Corona- bzw. Flammbehandlung und/oder durch eine funktionale Beschichtung erzeugt wird.

**23.** Polyesterfolie nach einem oder mehreren der Ansprüche 1 bis 22, **dadurch gekennzeichnet, dass** die funktionale Beschichtung eine Copolyester- oder Acrylatbeschichtung ist.

**24.** Polyesterfolie nach einem oder mehreren der Ansprüche 1 bis 23, **dadurch gekennzeichnet, dass** die haftvermittelte Folienoberfläche einen Kontaktwinkel zu Wasser von ≤ 64 ° aufweist.

**25.** Verfahren zur Herstellung einer Polyesterfolie nach einem oder mehreren der Ansprüche 1 bis 24 umfassend die Schritte

a) Herstellen einer mehrschichtigen Folie durch Coextrusion und Ausformen der Schmelzen zu flachen Schmelzefilmen,

b) Coronabehandeln und/oder Aufbringen einer funktionalen Beschichtung auf die nicht siegelfähige Oberfläche,

c) biaxiales Strecken der Folie und

d) Thermofixieren der gestreckten Folie.

26. Verfahren nach Anspruch 25, **dadurch gekennzeichnet, dass** die Coronabehandlung der nicht siegelfähigen Oberfläche der Folie nach der Thermofixierung erfolgt.

27. Verfahren nach Anspruch 25, **dadurch gekennzeichnet, dass** das Aufbringen der funktionalen Beschichtung auf die nicht siegelfähige Oberfläche der Folie vor der Querstreckung der Folie erfolgt.

28. Verwendung einer Polyesterfolie nach einem oder mehreren der Ansprüche 1 bis 24 als Verpackungsmaterial für Nahrungs- und Genussmittel oder als Deckelfolie für APET/CPET oder CPET Menüschalen.

**Peelfähige PET-Folie**

**Fertiggericht**

**APET/CPET-Tray**

**Fig. 1** Menueschale (tray) aus APET/CPET mit Fertiggericht und von Menüschale abziehbarer (peelfähiger) Folie

PET-Folie

Deckschicht (A)

APET/CPET

**Fig. 2** Anordnung von "peelfähiger" Folie und Streifen einer APET/CPE-Menüschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungs-Verhalten von Folien mit "weldable" und "peelable" Verhalten

**Fig. 5** Zusammenhang zwischen Siegeltemperatur in °C und Peelkraft in N/15mm

**Europäisches Patentamt**

**EUROPÄISCHER RECHERCHENBERICHT**

Nummer der Anmeldung

EP 04 02 5893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/026892 A1 (DUPONT TEIJIN FILMS U.S. LIMITED PARTNERSHIP; DAWES, MARK, EDWARD) 3. April 2003 (2003-04-03)<br>* Seite 1, Zeilen 3-7 *<br>* Seite 3, Zeile 30 - Seite 4, Zeile 31 *<br>* Seite 6, Zeile 4 - Seite 7, Zeile 33 *<br>* Seite 8, Zeile 25 - Seite 13, Zeile 32 *<br>* Seite 14, Zeile 21 - Seite 15, Zeile 23 *<br>* Seite 17, Zeilen 10-14 *<br>* Seite 19, Zeile 26 - Seite 22, Zeile 29 *<br>* Seite 25, Zeile 22 - Seite 30, Zeile 14; Ansprüche 10-12,31-35; Abbildungen *<br>----- | 1-28 | C08J5/18<br>B32B27/36 |
| X | WO 02/26493 A1 (DUPONT TEIJIN FILMS U.S. LIMITED PARTNERSHIP; DAWES, MARK, EDWARD) 4. April 2002 (2002-04-04)<br>* Seite 1, Zeilen 3-5 *<br>* Seite 2, Zeile 29 - Seite 4, Zeile 22 *<br>* Seite 5, Zeilen 8-28 *<br>* Seite 8, Zeile 30 - Seite 10, Zeile 17 *<br>* Seite 11, Zeile 9 - Seite 12, Zeile 16 *<br>* Seite 16, Zeile 9 - Seite 19, Zeile 8 *<br>* Seite 20, Zeile 11 - Seite 22, Zeile 8; Ansprüche 9,10,15; Abbildungen *<br>----- | 1-28 | RECHERCHIERTE SACHGEBIETE (Int.Cl.7)<br><br>C08J<br>B32B |
| X,D | WO 02/059186 A1 (DUPONT TEIJIN FILMS U.S. LIMITED PARTNERSHIP; SANKEY, STEPHEN, WILLIAM) 1. August 2002 (2002-08-01)<br>* Seite 1, Zeilen 3-10 *<br>* Seite 5, Zeilen 2-32 *<br>* Seite 7, Zeile 22 - Seite 8, Zeile 9 *<br>* Seite 8, Zeile 29 - Seite 10, Zeile 17 *<br>* Seite 11, Zeile 20 - Seite 12, Zeile 32 *<br>* Seite 15, Zeile 26 - Seite 18, Zeile 12; Ansprüche; Abbildungen; Beispiele *<br>-----<br>-/-- | 1-28 | |

Der vorliegende Recherchenbericht wurde für alle Patentansprüche erstellt

| Recherchenort | Abschlußdatum der Recherche | Prüfer |
|---|---|---|
| München | 1. Februar 2005 | Otegui Rebollo, J |

EPO FORM 1503 03.82 (P04C03)

**Europäisches Patentamt**

**EUROPÄISCHER RECHERCHENBERICHT**

Nummer der Anmeldung

EP 04 02 5893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,P | EP 1 471 098 A1 (MITSUBISHI POLYESTER FILM GMBH) 27. Oktober 2004 (2004-10-27) * Absätze [0001], [0020], [0024] - [0031], [0048] - [0062], [0067] - [0087], [0090]; Ansprüche; Abbildungen; Beispiele * ----- | 1-28 | |
| E | EP 1 475 229 A2 (MITSUBISHI POLYESTER FILM GMBH) 10. November 2004 (2004-11-10) * Absätze [0001], [0020], [0024] - [0031], [0046] - [0062], [0067] - [0075], [0078] - [0087], [0090]; Ansprüche; Abbildungen; Beispiele * ----- | 1-28 | |
| A | EP 1 176 005 A2 (MITSUBISHI POLYESTER FILM GMBH) 30. Januar 2002 (2002-01-30) * Absätze [0001], [0012], [0020] - [0024], [0026] - [0032], [0037], [0041] - [0045]; Ansprüche * ----- | 1-28 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 1. Februar 2005 | Otegui Rebollo, J |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 04 02 5893

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2005

| Im Recherchenbericht angeführtes Patentdokument | | Datum der Veröffentlichung | Mitglied(er) der Patentfamilie | | Datum der Veröffentlichung |
|---|---|---|---|---|---|
| WO 03026892 | A1 | 03-04-2003 | EP | 1444098 A1 | 11-08-2004 |
| WO 0226493 | A1 | 04-04-2002 | AU | 9010801 A | 08-04-2002 |
| | | | CN | 1466520 T | 07-01-2004 |
| | | | EP | 1322468 A1 | 02-07-2003 |
| | | | JP | 2004509789 T | 02-04-2004 |
| | | | US | 2004052993 A1 | 18-03-2004 |
| WO 02059186 | A1 | 01-08-2002 | CN | 1489613 T | 14-04-2004 |
| | | | EP | 1362075 A1 | 19-11-2003 |
| | | | JP | 2004518007 T | 17-06-2004 |
| | | | US | 2004067284 A1 | 08-04-2004 |
| EP 1471098 | A1 | 27-10-2004 | DE | 10318099 A1 | 11-11-2004 |
| | | | JP | 2004322647 A | 18-11-2004 |
| | | | US | 2004229060 A1 | 18-11-2004 |
| EP 1475229 | A2 | 10-11-2004 | DE | 10318098 A1 | 11-11-2004 |
| | | | JP | 2004322643 A | 18-11-2004 |
| EP 1176005 | A2 | 30-01-2002 | DE | 10036407 A1 | 07-02-2002 |
| | | | JP | 2002103549 A | 09-04-2002 |
| | | | US | 2002045039 A1 | 18-04-2002 |

EPO FORM P0461

Für nähere Einzelheiten zu diesem Anhang : siehe Amtsblatt des Europäischen Patentamts, Nr.12/82